# NEUE EUROPÄISCHE PATENTSCHRIFT

(11) **EP 2 138 810 B2**
(45) Veröffentlichungstag und Bekanntmachung des Hinweises auf die Entscheidung über den Einspruch: **19.04.2023**
(45) Hinweis auf die Patenterteilung: 23.08.2017
(21) Anmeldenummer: 09008054.0
(22) Anmeldetag: 19.06.2009
(51) Int. Cl.: G01G 19/414, G01G 23/42, G07F 7/02, G07G 1/00

(54) **Ladenwaage**
Shop scales
Balance de chargement

(30) Priorität: 23.06.2008 DE 102008029419
(43) Veröffentlichungstag der Anmeldung: 30.12.2009
(73) Patentinhaber: Bizerba SE & Co. KG, 72336 Balingen (DE)
(72) Erfinder: Schick, Frank, 72461 Albstadt (DE); Andronic-Gorcea, Tudor, 8500 Frauenfeld (CH)
(74) Vertreter: Huber, Meik

(56) Entgegenhaltungen:
- EP-A2- 0 216 035
- EP-A2- 0 991 027
- EP-B1- 1 310 140
- DE-A1- 10 039 668
- DE-A1- 10 304 589
- DE-U1- 20 122 342
- US-A1- 2003 141 116
- US-A1- 2004 131 997
- US-A1- 2004 226 757
- US-B1- 6 779 722

## Beschreibung

Die Erfindung betrifft eine Waage, insbesondere eine Ladenwaage zum Wiegen von Wiegegut nach den Merkmalen des Oberbegriffs des Anspruchs 1. Aus der Praxis sind Waagen bekann, die eine biometrische Identifikation der Benutzer vornehmen.
So zeigt die WO 2005/076813 A2 eine öffentlich zugängliche Personenwaage für Fitness-Studios, die mittels einer biometrischen Identifikation persönliche Daten wie Körpergewicht oder Body-Maß Index vor unberechtigtem Zugriff schützt.
Aus der EP 1 320 730 B1 ist eine Laborwaage bekannt, bei der zur Verbesserung der Wiegeergebnisse unterschiedliche Parameter der Laborwaage in unterschiedlichen Benutzerprofilen speicherbar sind. Über eine Erkennungsvorrichtung werden unterschiedliche Personen erkannt und damit ein vorab gespeicherter Parametersatz aufgerufen. Aus der EP0991027 ist eine Selbstbedienungskasse bekannt, mit einem biometrischen Sensor für die Überprüfung der Identität des Benutzers.

Im Einzelhandel werden Waagen verwendet, um Lebensmittel wie z. B. Fleisch- oder Wurstwaren oder Käse entsprechend den Kundenwünschen abzupacken. Dabei identifizieren sich die Bediener der Waagen durch Eingabe eines Codes oder durch einen eindeutigen Schlüssel.

In der Praxis des Einzelhandels ist es wichtig, einen Bedienvorgang möglichst einfach zu gestalten und dabei mögliche Fehlbedienungen zu verhindern. Dies ermöglicht eine rasche und Zufriedenstellende Bedienung eines Kunden, insbesondere, wenn der Andrang zu sogenannten Stoßzeiten sehr groß ist.

Es ist Aufgabe der vorliegenden Erfindung eine Waage zu schaffen, die einfach bedienbar ist, eine hohe Fehlbediensicherheit aufweist und dabei insbesondere ein flexibles und schnelles Bedienen der Kunden ermöglicht.

Die Aufgabe wird erfindungsgemäß durch eine Waage gemäß den Merkmalen des Anspruchs 1 gelöst.

Die Waage weist eine Steuerungsvorrichtung auf, die eine Bedieneridentität automatisch ermittelt und die Benutzeridentität automatisch mit dem Gewichtswert des Wägeguts verbindet. Das verbundene Datum aus dem Gewichtswert und der Benutzeridentität wird dann in einem Verkaufsspeicher abgelegt. Dabei kann das verbundene Datum aus einem gemeinsamen Datensatz bestehen, oder es kann der Gewichtswert in einer Tabelle oder in einer Matrix abgespeichert werden, wobei die Tabelle oder die Matrix eine Struktur aufweist, die eine eindeutige Zuordnung zu der Benutzeridentität ermöglicht. Der Verkaufsspeicher ist ein elektronisch les- und beschreibbarer Speicher oder Speicherbereich, vorzugsweise ein RAM oder Flash-Speicher, der zur Zwischenspeicherung von Wiegevorgängen dient. Die Zwischengespeicherten Wiegedaten werden am Ende eines Verkaufsvorganges zum Zweck der Rechnungserstellung abgerufen, wobei anhand der Bedieneridentität die Zugehörigkeit der Daten zu einem Bediener oder einem Verkaufsvorgang selektiert wird. So wird ermöglicht, dass ein Verkaufsvorgang weitgehend automatisiert abläuft. Ein Bediener der Waage muss nur noch sehr wenige manuelle Eingaben vornehmen. Der Bediener wird vorzugsweise beim Herantreten an die Waage automatisch erkannt. Eine manuelle Eingabe der Bedieneridentität ist somit nicht mehr notwendig. Auch die Wiegedaten werden automatisch erfasst und gespeichert. Somit reduzieren sich die notwendigen Eingaben an der Waage, oder die Handgriffe zu deren Bedienung weitestgehend.

Die Steuerungsvorrichtung ermittelt die Benutzeridentität anhand biometrischer Daten. Biometrische Daten sind solche Daten, die z. B. auf Basis einer Bilderkennung über eine Kamera, oder einen Fingerabdrucksensor oder über Stimmerkennung gewonnen werden. Es sind in einem Personendatenspeicher zu jedem Bediener biometrische Daten hinterlegt. Über einen biometrischen Sensor werden zudem vor oder während eines Wiegevorgangs die biometrischen Daten eines Benutzers gemessen und von der Steuervorrichtung mit den in dem Personendatenspeicher hinterlegten Daten verglichen. Aus dem Vergleich der Daten wird von der Steuerungsvorrichtung automatisch eine Benutzeridentität bestimmt.

Bediener oder Benutzer bedeutet in diesem Kontext einen Benutzer der Waage, der in einem Laden einen Kunden bedient, um z. B. frische Lebensmittel wie Fleisch, Wurst oder Käse abzuwiegen und zu verpacken. Alle Bediener oder Benutzer sind jedenfalls eine Gruppe Individuen von definierter Zahl, deren biometrische Daten in dem Personenspeicher hinterlegt sind. Es ist jedoch auch denkbar, dass ein Kunde als Bediener oder Benutzer einer Waage, insbesondere einer SB bzw. Selbstbedienungswaage tätig wird, indem der Kunde sich z. B. als Stammkunde registrieren lässt und dabei seine biometrischen Daten in dem Personenspeicher hinterlegt.

Eine Registrierung bzw. Hinterlegung der biometrischen Daten geschieht durch Anlegen eines Benutzerprofils und Erfassen der zugehörigen biometrischen Daten über einen biometrischen Sensor.

Eine solche automatische Benutzererkennung ist relativ rechenintensiv und belastet die Rechenkapazität der Steuerungsvorrichtung. Deshalb kann die Benutzererkennung nicht ständig aktiv sein, sondern es kommt darauf an, den richtigen Zeitpunkt zum Erkennen des Benutzers zu bestimmen.

Es hat sich gezeigt, dass es von Vorteil ist, den Benutzer in dem Moment des Herantretens an die Waage zu identifizieren. eines Benutzers wird von der Steuerungsvorrichtung die Benutzererkennung initiiert, so dass zum Zeitpunkt des Wiegens bereits der Benutzer identifiziert ist. Es ist vorgesehen, dass die Waage ein Gehäuse mit einem Näherungssensor aufweist, der als Infrarotsensor oder als Ultraschallsensor ausgebildet sein kann. Dieser Näherungssensor detektiert ein Herantreten des Benutzers an die Waage und meldet dies an die Steuerungsvorrichtung, die daraufhin eine Benutzererkennung initiiert.

In einer Ausführung ist vorgesehen, dass das Gehäuse eine Eingabevorrichtung in Form einer Tastatur oder eines berührungsempfindlichen Bildschirms, vorzugsweise einen Touchscreen aufweist, die mit der Steuerungsvorrichtung verbunden ist. Die Steuerungsvorrichtung kann eine Benutzeridentifikation starten, sobald sie eine Eingabe an der Eingabevorrichtung erkennt.

Die Steuerungsvorrichtung kann dabei als separates Modul ausgebildet sein, das außerhalb der Waage angeordnet ist und mit der Waage verbunden wird. Die Steuerungsvorrichtung kann alternativ auch innerhalb einer Waage angeordnet sein. Das Modul der Steuerungsvorrichtung kann als Hardwaremodul mit einem eigenen Mikroprozessor und eigenem Speicher und einer Kommunikationsschnittstelle ausgebildet sein. Das Modul kann alternativ auch als Softwaremodul ausgebildet sein und auf einer bereits vorhandenen Hardwarearchitektur, z. B. einem Server, implementiert sein.

Insbesondere kann vorgesehen sein, dass eine Waage innerhalb eines Waagenverbundes mit mehreren verbundenen Waagen eine Steuerungsvorrichtung aufweisen, die als zentrale Steuerungsvorrichtung weitere Waagen steuert, die an den Waagenverbund angeschlossen sind.

In einer Ausführung kann vorgesehen sein, dass die Steuerungsvorrichtung mit einer Personenwaage verbunden ist. Diese ist als z. B. Platte, die im Boden vor der Waage angeordnet ist, ausgeführt. Die Steuerungsvorrichtung kann eine Benutzeridentifikation starten, sobald sie ein Betreten der Personenwaage erkennt. Von Vorteil ist, wenn das über die Personenwaage ermittelte Gewicht zudem als zusätzlicher biometrischer Datensatz zum Erkennen eines Benutzers dient. So kann die Treffsicherheit der automatischen Benutzererkennung erhöht oder die benötigte Rechenkapazität verringert werden.

Als biometrischer Sensor kann ein Fingerprintsensor zum Erkennen eines Fingerabdrucks verwendet werden. Es kann auch ein Mikrofon zum Erkennen der Stimme bzw. des Sprachprofils eines Benutzers verwendet werden.

Eine vorteilhafte Ausgestaltung sieht vor, dass eine Kamera als biometrischer Sensor verwendet wird, und der Benutzer über eine Bilderkennung identifiziert wird. Diese Lösung ermöglicht eine berührungsfreie Erkennung des Benutzers, ohne dass der Benutzer eine zusätzliche Aktion, wie z. B. eine Passwort- oder Schlüsseleingabe, ausführen muss, um sich zu identifizieren.

Von Vorteil ist, wenn die Steuerungsvorrichtung mit einem Bestandsspeicher verbunden ist, in dem zusätzliche Waren- und oder Preisinformationen abgespeichert sind. So kann die Steuerungsvorrichtung die Wiegedaten gleich mit einer Preisinformation automatisch verbinden und in dem Verkaufsspeicher ablegen. Die Steuerungsvorrichtung kann auch eine zusätzliche Information wie z. B. eine Werbebotschaft oder eine zeitlich befristete Aktion aus dem Bestandspeicher abrufen und anzeigen oder zusammen mit den Wiegedaten in dem Verkaufsspeicher ablegen.

Eine Zuordnung der Wiegedaten zu einer solchen Waren- und oder Preisinformationen kann über eine Benutzereingabe an einer Eingabevorrichtung erfolgen. Von Vorteil ist jedoch, wenn die Waage die Ware selbsttätig erkennt. Hierfür kann die Steuerungsvorrichtung mit einer digitalen Bildverarbeitung verbunden sein, die eine auf die Lastplatte gerichtete Kamera aufweist. Die digitale Bildverarbeitung nimmt eine Auswertung des Kamerabildes zum Erkennen des aufgelegten Wägeguts vor und übermittelt diese Information an die Steuerungsvorrichtung. Diese nimmt dann die Verbindung von gemessenem Gewichtswert mit einer Wareninformation und/oder Preisinformation anhand der Auswertung automatisch vor.

In einer Ausführung kann vorgesehen sein, dass die Waage und/oder die Steuerungsvorrichtung eine Schnittstelle aufweist. Diese Schnittstelle kann zur Kommunikation mit dem Personendatenspeicher und/oder dem Verkaufsspeicher und/oder dem Bestandsspeicher dienen. Die Schnittstelle kann als USB-Schnittstelle, oder als LAN-Schnittstelle, oder als WLAN-Schnittstelle oder als Ethernetschnittstelle ausgebildet sein. Über diese Schnittstelle kann zudem ein Kassensystem oder ein Etikettendrucker an die Waage angeschlossen sein.

Auch können mehrere Waagen untereinander über diese Schnittstelle verbunden sein bzw. kommunizieren. So ist es möglich, auf einfache Art und Weise einen Waagenverbund, bestehend aus mindestens zwei Waagen und vorzugsweise weiteren Geräten wie Kassensysteme oder Etikettendrucker, aufzubauen. Über einen solchen Waagenverbund kann insbesondere ein komfortables sogenanntes Durchbedienen eines Kunden ermöglicht werden. Dabei greifen alle Waagen in dem Verbund auf einen zentralen Verkaufsspeicher zu, in dem von der Steuerungsvorrichtung jeweils alle Verkaufsvorgänge fortlaufend und mit der Bedieneridentität verknüpft und automatisch abgelegt werden.

Es können an einer Waage nacheinander mehrere Kunden und/oder Bediener tätig sein oder ein Kunde und/oder Bediener nutzt nacheinander mehrere Waagen. Über die Bedieneridentifikation anhand der biometrischen Daten und der automatischen Verknüpfung der Wiegedaten mit der Bedieneridentität, können die Wiegedaten in einem zentralen Verkaufsspeicher insbesondere fortlaufend abgelegt werden, ohne dass zu jedem Wiegevorgang Eingaben wie Passwort oder Schlüssel zur Identifikation notwendig werden. Am Ende eines Verkaufsvorganges können dann von irgendeinem beliebigen angeschlossenen Gerät, alle zu einer Benutzeridentität gehörenden und/oder zu einem Verkaufsvorgang gehörenden Wiegedaten zur Rechnungserstellung abgerufen werden.

Um eine hohe Erkennungsrate sicherzustellen kann vorgesehen sein, dass die Waage selbstlernend ausgebildet ist. Insbesondere wenn der automatische Vergleich der gemessenen mit den gespeicherten biometrischen Daten keine hinreichend genaue Selektion erlaubt, ist vorgesehen, dass die Steuerungsvorrichtung die in dem Personendatenspeicher hinterlegten Daten an die aktuellen gemessenen Daten anpasst. Somit wird gewährleistet, dass die in dem Personendatenspeicher hinterlegten Daten automatisch aktualisiert werden und aktuell sind.

Weitere Ausführungsbeispiele der Erfindung sind in den Figuren dargestellt und der dazugehörenden Beschreibung beschrieben.

Es zeigen,
- Figur 1:: Eine schematische Darstellung eines Waagenverbundes aus zwei Ladenwaagen.
- Figur 2:: Ein Verfahren zum Betreiben der Waagen.

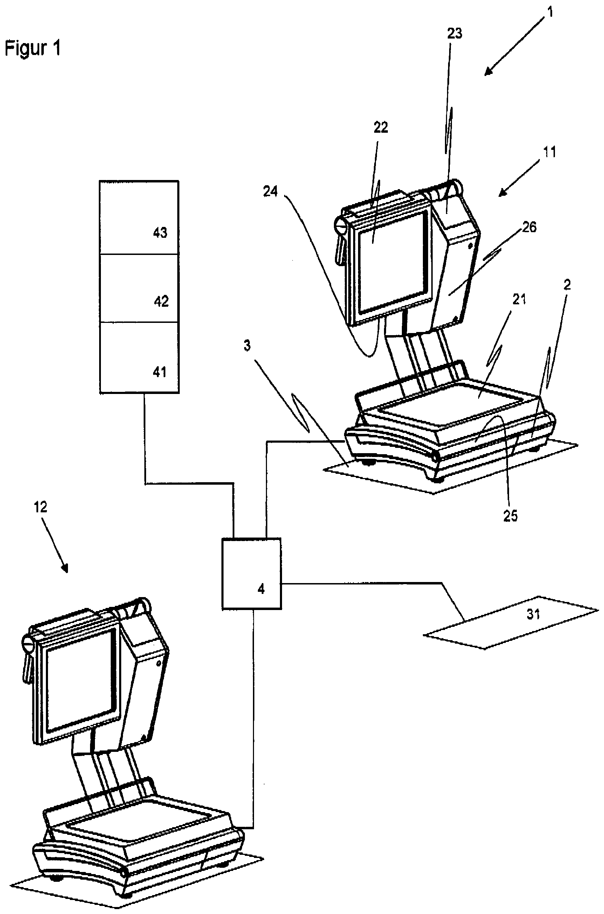

In der **Figur 1** ist schematisch ein Waagenverbund 1 mit zwei einzelnen Ladenwaagen 11, 12 dargestellt. Die Ladenwaagen 11 und 12 sind identisch aufgebaut, so dass hier nur eine der Waagen exemplarisch beschrieben wird. Die Ladenwaage 11 weist ein Gehäuse 2 mit einer Last- bzw. Wiegeplatte 21 auf. Das Gehäuse 2 ist an seiner Unterseite über Füße auf einer ebenen Fläche 3, z. B. einer Verkaufstheke, abstellbar. Die Füße sind in der Höhe verstellbar, um zu gewährleisten, dass die Waage 11 auch bei unebenem Untergrund immer genau horizontal ausgerichtet ist. In dem Gehäuse 2 ist ein nicht dargestellter Gewichtsensor zum Erfassen des Gewichts eines auf die Lastplatte 21 aufgelegten Gegenstandes, also des Wiegeguts, angeordnet.

Das Gehäuse 2 weist zudem einen Drucker 26 zum Drucken von Etiketten und ein Display 22 auf. Das Display 22 ist als Touch-Screen ausgebildet und dient sowohl zur Anzeige als auch zur Eingabe von Daten. Eine Steuerungsvorrichtung 4 ist mit den Waagen 11, 12 und dem Personendatenspeicher 41, dem Verkaufsspeicher 42 und dem Bestandspeicher 43 verbunden.

Die Steuerungsvorrichtung 4 und die Speicher, Personendatenspeicher 41, Verkaufsspeicher 42 und Bestandspeicher 43 sind in der Figur schematisch dargestellt. Sie können innerhalb einer Waage integriert angeordnet sein, oder aber separat z. B. in einem räumlich entfernt von den Waagen angeordneten Server installiert sein. Die Speicher 41, 42, 43 können jeweils als physikalisch getrennte lesbare und beschreibbare Speicher ausgebildet sein. Sie können jedoch auch auf einem physikalischen Speicher als unterschiedliche Speicherbereiche realisiert werden. Die Verbindung der Steuervorrichtung 4 mit den Speichern 41, 42, 43 und den Waagen 11, 12 ist über digitale Kommunikationsschnittstellen realisiert, die in der Figur 1 als Leitungen skizziert sind.

An Boden vor der Waage 11 ist eine Personenwaage 31 angeordnet, die einen separaten Gewichtssensor aufweist und mit der Steuervorrichtung 4 verbunden ist. Die Personenwaage 31 erfasst das Gewicht eines Benutzers der Waage 11 und meldet dieses an die Steuervorrichtung 4.

An der Vorderseite des Gehäuses 2 ist ein Näherungssensor 25 angebracht, der eine Annäherung eines Benutzers an die Waage 11 detektiert. Der Näherungssensor ist als passiver Infrarotsensor ausgebildet und erfasst eine Bewegung im Nahbereich vor der Waage 11.

Im oberen Bereich des Gehäuses 2 ist neben dem Display 22 als biometrischer Sensor eine Kamera 23 angeordnet, die zur Erfassung der biometrischen Daten eines Benutzers oder Bedieners der Waage 11 dient. Das Gesichtsfeld der Kamera 23 ist auf einen Benutzer hin gerichtet. Die Kamera 23 nimmt ein Bild auf, welches digitalisiert und einer geometrischen Mustererkennung unterzogen wird, um eine Gesichtserkennung eines Benutzers durchzuführen. Bei der Mustererkennung werden aus dem Bild Erkennungsmerkmale extrahiert, die mit den in dem Personendatenspeicher 41 gespeicherten Daten verglichen werden. Anhand der Daten mit der größten Übereinstimmung wird ein Benutzer identifiziert.

An der Unterseite des Displays 22 ist eine weitere Kamera 24 angeordnet, deren Gesichtsfeld auf die Lastplatte 21 gerichtet ist. Über diese Kamera 24 erfolgt über eine Mustererkennung eine automatische Erkennung der zu wiegenden Waren, so dass notwendige Eingaben zum Bedienen der Waage 11, 12 weitest möglich entfallen können.

Bei einem Wiegevorgang tritt ein Benutzer an die Waage 11 heran. Über den Näherungssensor 25 wird sein Herannahen detektiert und an die Steuerungsvorrichtung 4 gemeldet. Diese initiiert über die Kamera 23 und über die Personenwaage 31 eine Benutzererkennung. Der Benutzer legt Wägegut auf die Lastplatte 21 auf, welches über die Kamera 24 automatisch erkannt wird. Die Steuerungsvorrichtung ruft dann aus dem Bestandspeicher 43 Preisinformationen ab, verknüpft diese automatisch mit den Wiegedaten und der Benutzeridentität und legt bei einer Bestätigung des Wiegevorganges die verbundenen Daten automatisch in dem Verkaufsspeicher 42 ab. Danach können weitere Benutzer die Waage bedienen oder weitere Wiegevorgänge des gleichen Benutzers folgen. Am Ende eines Verkaufsvorganges wird dieser über eine Eingabe des Benutzers abgeschlossen. Die Steuerungsvorrichtung 4 liest alle zu dem Benutzer gehörenden Daten aus dem Verkaufsspeicher und druckt über den Drucker 26 eine Rechnung aus. Die Verkaufsdaten werden dabei aus dem Verkaufsspeicher 42 gelöscht.

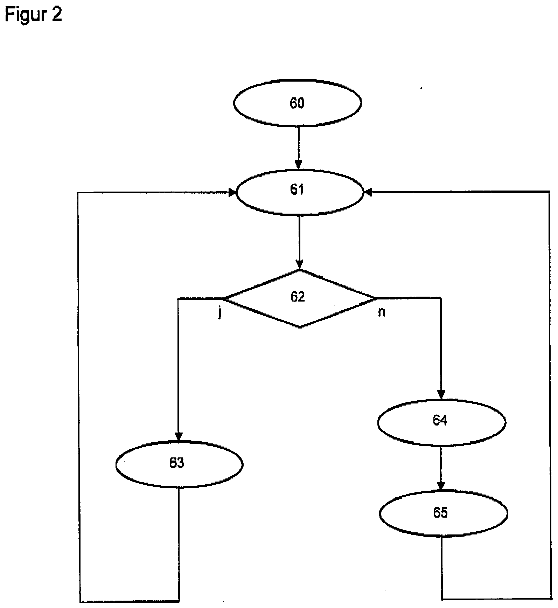

In **Figur 2** ist ein Betriebsverfahren für die Waage 11 bzw. 12 dargestellt. In einem ersten Schritt 60 werden die Benutzer der Waage angelegt und deren biometrische Daten in dem Personendatenspeicher 41 erfasst. Dabei werden über den biometrischen Sensor, also der Kamera 23 eine oder mehrere Messungen durchgeführt, also Bilder aufgenommen, deren Ergebnisse in dem Personendatenspeicher 41 unter der jeweiligen Benutzeridentität abgelegt werden. Als Ergebnis werden hier charakteristische Merkmale verstanden, die eine Benutzeridentifikation ermöglichen. Ein Abspeichern kompletter Bilder ist nicht notwendig.

In dem Schritt 61 erfolgt das Wiegen des Wiegeguts und die Identifizierung des Benutzers. Dazu wird von der Steuerungsvorrichtung 4 eine Benutzererkennung initiiert, also über die Kamera 23 ein Bild eines Benutzers aufgenommen. Dieses Bild wird digital verarbeitet und mit den in dem Personendatenspeicher 41 hinterlegten Daten verglichen. Sofern der Vergleich sicher möglich ist, das heißt oberhalb einer Toleranzschwelle liegt, erfolgt die Identifikation des Benutzers über die Steuervorrichtung 4 automatisch. In Schritt 63 erfolgt das Wiegen und die automatische Verknüpfung des Wiegeergebnisses mit der Benutzeridentifikation. Anschließend wird das verknüpfte Wiegedatum in dem Verkaufsspeicher 42 abgespeichert. Der Wiegevorgang ist somit beendet. Die Bedienung der Waage kann nun mit Schritt 61 und einem neuen Wiegevorgang weitergehen.

Sofern der Vergleich kein eindeutiges Ergebnis liefert, d. h. unterhalb der Toleranzschwelle liegt, geht das Verfahren mit Schritt 64 weiter. Bei Schritt 64 zeigt die Steuervorrichtung 4 eine Auswahl der besten Treffer auf dem Display 22 an. Es ist vorgesehen, dass die drei wahrscheinlichsten Benutzer angezeigt werden. Die Anzeige kann durch Anzeige als Passbild oder der Namen in Klartext erfolgen. Daraufhin kann der Benutzer z. B. durch Antippen der richtigen Auswahl sich identifizieren, und damit den richtigen Benutzers wählen.

Es ist vorgesehen, dass die Toleranzschwelle einstellbar ist. So kann z. B. eine Toleranz an eine spezielle Umgebung angepasst werden um eine kundenspezifische Erkennrate einzustellen. So kann z.B. bei einem auf wenige Personen begrenzten Kreis an Benutzern die Toleranzschwelle großzügiger eingestellt werden, als bei einer großen Menge an Benutzern. Bei einer geringen Anzahl von Benutzern können auch mit relativ geringer Erkennrate gute Ergebnisse erzielt werden. Bei einer großen Anzahl von Benutzern ergeben sich statistisch gesehen mehr Ähnlichkeiten zwischen den Benutzern, so dass eine sichere Erkennung, also mit geringer Toleranz wichtig ist.

In Schritt 65 werden die in dem Personendatenspeicher hinterlegten Daten gepflegt. Das bedeutet, dass wenn die hinterlegten Daten nicht hinreichend waren, um einen Benutzer zu identifizieren, werden diese an die neuen, über den biometrischen Sensor gemessenen Daten angepasst. Dabei werden die neuen gemessenen Daten mit einem prozentualen Faktor versehen und somit gewichtet. Diese werden dann mit den ursprünglichen Daten verrechnet und diese somit angepasst. Durch die Anpassung der Daten kann die Waage auf einfache Weise auf eine Veränderung der biometrischen Daten, die z. B. bei einer Gesichtserkennung auf einer Veränderung des Gesichts oder einer geänderten Beleuchtungssituation basieren können, reagieren. Die Waage ist dadurch selbstlernend ausgebildet und passt sich an neue Daten auf einfache Art und Weise an.

In Schritt 65 erfolgt nach der Identifizierung des Benutzers noch das Wiegen und die automatische Verknüpfung des Wiegeergebnisses mit der Benutzeridentifikation. Anschließend wird das verknüpfte Wiegedatum in dem Verkaufsspeicher 42 abgespeichert. Der Wiegevorgang ist somit beendet. Die Bedienung der Waage kann nun mit Schritt 61 und einem neuen Wiegevorgang weitergehen.

## Patentansprüche

1. Waage, nämlich Ladenwaage (11, 12), mit einem eine Lastplatte (21) tragenden Gehäuse (2) und einem Display (22) zur Anzeige eines Gewichtswertes von auf der Lastplatte (21) befindlichem Wägegut, wobei ein mit der Lastplatte (21) verbundener Gewichtssensor den Gewichtswert ermittelt, und
mit einer Steuerungsvorrichtung (4), die mit einem Personendatenspeicher (41) und einem biometrischen Sensor (23) zur Messung von Bedienerdaten verbunden ist und durch Vergleich der gemessenen Bedienerdaten mit den gespeicherten Bedienerdaten eine Bedieneridentität ermittelt,
**dadurch gekennzeichnet,**
**dass** die Steuerungsvorrichtung (4) automatisch den Gewichtswert des Wägeguts mit der ermittelten Bedieneridentität verbindet und die verbundenen Daten in einem Verkaufsspeicher (42) fortlaufend ablegt,
wobei die Steuerungsvorrichtung (4) mit einem Bestandsspeicher (43) mit Waren und/oder Preisinformationen verbunden ist, und den gemessenen Gewichtswert des Wiegeguts automatisch mit einer aus dem Bestandsspeicher ausgelesenen Wareninformation und/oder Preisinformation verbindet.

2. Waage nach Anspruch 1,
**dadurch gekennzeichnet,**
**dass** das Gehäuse (2) einen Näherungssensor (25), vorzugsweise einen Infrarot oder einen Ultraschallsensor, aufweist, der mit der Steuerungsvorrichtung (4) verbunden ist und diese eine Messung der Benutzerdaten initiiert, wenn der Näherungssensor (25) eine Person detektiert.

3. Waage nach Anspruch 1 oder 2,
**dadurch gekennzeichnet,**
**dass** die Steuerungsvorrichtung (4) mit dem Gewichtssensor verbunden ist, und eine Messung der biometrischen Benutzerdaten initiiert, wenn der Gewichtssensor ein Auflegen von Wägegut auf die Lastplatte (21) detektiert.

4. Waage nach einem der Ansprüche 1 bis 3,
**dadurch gekennzeichnet,**
**dass** die Steuerungsvorrichtung (4) mit einer Eingabevorrichtung, vorzugsweise einer Tastatur oder einem Touchscreen (22) verbunden ist, und eine Messung der Benutzerdaten initiiert, wenn über die Eingabevorrichtung (22) eine Eingabe erfolgt.

5. Waage nach einem der Ansprüche 1 bis 4,
**dadurch gekennzeichnet,**
**dass** die Steuerungsvorrichtung (4) mit einer Personenwaage (31) zum Erfassen des Gewichts eines Bedieners verbunden ist, und die Steuerungsvorrichtung (4) eine Messung der Benutzerdaten initiiert, wenn über die Personenwaage (31) ein Benutzer detektiert wird.

6. Waage nach Anspruch 5,
**dadurch gekennzeichnet,**
**dass** die Steuerungsvorrichtung (4) das über die Personenwaage (31) gemessene Gewicht eines Bedieners als ein biometrisches Identifikationsmerkmal zum Ermitteln der Bedieneridentität verwendet.

7. Waage nach einem der Ansprüche 1 bis 6,
**dadurch gekennzeichnet,**
**dass** der biometrische Sensor (23) als Fingerprintsensor zum Erkennen eines Fingerabrucks oder dass der biometrische Sensor (23) als Spracherkennungssensor mit einem Mikrofon zum Erkennen eines Sprachprofils ausgebildet ist.

8. Waage nach einem der Ansprüche 1 bis 6,
**dadurch gekennzeichnet,**
**dass** der biometrische Sensor (23) als optischer Sensor mit einer Kamera zur Gesichtserkennung ausgebildet ist.

9. Waage nach einem der vorhergehenden Ansprüche,
**dadurch gekennzeichnet,**
**dass** die Steuerungsvorrichtung (4) die Verbindung von gemessenem Gewichtswert mit einer Wareninformation und/oder Preisinformation anhand einer Bedienereingabe über Tastatur oder Touchscreen (22) vornimmt.

10. Waage nach einem der vorhergehenden Ansprüche,
**dadurch gekennzeichnet,**
**dass** die Steuerungsvorrichtung (4) mit einer digitalen Bildverarbeitung verbunden ist, die eine auf die Lastplatte gerichteten Kamera (24) aufweist und eine Auswertung des Kamerabildes zum Erkennen des aufgelegten Wägeguts an die Steuerungsvorrichtung (4) übermittelt, so dass diese die Verbindung von gemessenem Gewichtswert mit einer Wareninformation und/oder Preisinformation anhand der Auswertung automatisch vornimmt.

11. Waage nach einem der vorhergehenden Ansprüche,
**dadurch gekennzeichnet,**
**dass** die Steuerungsvorrichtung (4) über eine Schnittstelle, vorzugsweise eine USB Schnittstelle, oder eine LAN Schnittstelle mit dem Personendatenspeicher (41) und/oder dem Verkaufsspeicher (42) und/oder dem Bestandsspeicher (43) verbunden ist.

12. Waagenverbund mit wenigstens zwei Waagen nach einem der vorhergehenden Ansprüche,
**dadurch gekennzeichnet,**
**dass** die Waagen (11, 12) über eine Kommunikationsschnittstelle, vorzugsweise LAN-, Ethernet-, W-LAN-, Intranet- oder Internet- Schnittstelle, untereinander und mit dem Verkaufsspeicher (42) verbunden sind.

13. Waagenverbund nach Anspruch 12,
**dadurch gekennzeichnet,**
**dass** die Waagen (11, 12) über eine Kommunikationsschnittstelle, vorzugsweise LAN-, Ethernet-, W-LAN-, Intranet- oder Internet- Schnittstelle, mit der Steuerungsvorrichtung (4) verbunden sind.

14. Waagenverbund nach einem der Ansprüche 12 oder 13,
**dadurch gekennzeichnet,**
**dass** der Verkaufsspeicher (42) über eine Schnittstelle auslesbar ist, wobei eine Waage (11, 12) oder ein Kassensystem oder ein Etikettendrucker am Ende eines Verkaufsvorgangs über ein Pullsignal alle zu einer Bedieneridentität gehörenden Warendaten bzw. Gewichtswerte über die Schnittstelle zum Erstellen einer Rechnung abruft.

## Claims

1. Scale, specifically a shop scale (11, 12), having a housing (2) carrying a load plate (21) and a display (22) for displaying a weight of goods to be weighed that are located on the load plate (21), a weight sensor connected to the load plate (21) determining the weight, and
having a control device (4), which is connected to a personal data memory (41) and a biometric sensor (23) for measuring operator data and determines an operator identity by comparing the measured operator data with the stored operator data, **characterized in that**
the control device (4) automatically links the weight of the goods to be weighed with the operator identity determined, and continuously stores the linked data in a sales memory (42),
the control device (4) being connected to a stock memory (43) with goods and/or price information, and automatically linking the measured weight of the weighed goods with an item of goods and/or price information read from the stock memory.

2. Scale according to Claim 1,
**characterized in that**
the housing (2) has a proximity sensor (25), preferably an infrared or an ultrasonic sensor, which is connected to the control device (4), and the latter initiates a measurement of the user data when the proximity sensor (25) detects a person.

3. Scale according to Claim 1 or 2,
**characterized in that**
the control device (4) is connected to the weight sensor and initiates a measurement of the biometric user data when the weight sensor detects that goods to be weighed have been put onto the load plate (21).

4. Scale according to one of Claims 1 to 3,
**characterized in that**
the control device (4) is connected to an input device, preferably a keyboard or a touchscreen (22), and initiates a measurement of the user data when an input is made via the input device (22).

5. Scale according to one of Claims 1 to 4,
**characterized in that**
the control device (4) is connected to a personal scale (31) for measuring the weight of an operator, and the control device (4) initiates a measurement of the user data when a user is detected via the personal scale (31).

6. Scale according to Claim 5,
**characterized in that**
the control device (4) uses the weight of an operator measured via the personal scale (31) as a biometric identification feature for determining the operator identity.

7. Scale according to one of Claims 1 to 6,
**characterized in that**
the biometric sensor (23) is formed as a fingerprint sensor for identifying a fingerprint, or **in that** the biometric sensor (23) is formed as a voice recognition sensor having a microphone for identifying a voice profile.

8. Scale according to one of Claims 1 to 6,
**characterized in that**
the biometric sensor (23) is formed as an optical sensor with a camera for face recognition.

9. Scale according to one of the preceding claims,
**characterized in that**
the control device (4) performs the linking of measured weight with an item of goods and/or price information by using an operator input via keyboard or touchscreen (22).

10. Scale according to one of the preceding claims,
**characterized in that**
the control device (4) is connected to a digital image processing system, which has a camera (24) aimed at the load plate and transmits an evaluation of the camera image for identifying that the goods to be weighed have been put on to the control device (4), so that the latter automatically performs the linking of measured weight with an item of goods and/or price information by using the evaluation.

11. Scale according to one of the preceding claims,
**characterized in that**
the control device (4) is connected via an interface, preferably a USB interface or a LAN interface, to the personal data memory (41) and/or the sales memory (42) and/or the stock memory (43) .

12. Scales group having at least two scales according to one of the preceding claims,
**characterized in that**
the scales (11, 12) are connected to one another and to the sales memory (42) via a communications interface, preferably a LAN, Ethernet, W-LAN, intranet or Internet interface.

13. Scales group according to Claim 12,
**characterized in that**
the scales (11, 12) are connected to the control device (4) via a communications interface, preferably a LAN, Ethernet, W-LAN, intranet or Internet interface.

14. Scales group according to either of Claims 12 and 13,
**characterized in that**
the sales memory (42) can be read via an interface, a scale (11, 12) or a cash register system or a label printer retrieving all the product data and weights belonging to an operator identity via the interface via a pull signal at the end of a sales operation in order to create an invoice.

## Revendications

1. Balance, en particulier balance de magasin (11, 12), comprenant un boîtier (2), qui porte un plateau de charge (21), et un afficheur (22) destiné à l'affichage d'une valeur de poids d'un article à peser situé sur le plateau de charge (21), un capteur de poids relié au plateau de charge (21) déterminant la valeur de poids, et
un dispositif de commande (4) qui est relié à une mémoire de données personnelles (41) et à un capteur biométrique (23) destiné à la mesure de données d'opérateur et qui détermine une identité d'opérateur par comparaison des données d'opérateur mesurées avec les données d'opérateur mémorisées,
**caractérisée en ce que**
le dispositif de commande (4) relie automatiquement la valeur de poids de l'article à peser à l'identité d'opérateur et stocke en continu les données reliées dans une mémoire de vente (42),
le dispositif de commande (4) étant relié à une mémoire de stock (43) qui comprend des informations de marchandises et/ou de prix, et reliant automatiquement la valeur de poids mesurée de l'article à peser à une information de marchandise et/ou une information de prix lues dans la mémoire de stock.

2. Balance selon la revendication 1,
**caractérisée en ce que**
le boîtier (2) comporte un détecteur de proximité (25), de préférence un capteur infrarouge ou un capteur à ultrasons, qui est relié au dispositif de commande (4), et celui-ci lance une mesure des données d'utilisateur quand le détecteur de proximité (25) détecte une personne.

3. Balance selon la revendication 1 ou 2,
**caractérisée en ce que**
le dispositif de commande (4) est relié au capteur de poids et lance une mesure des données d'utilisateur biométriques quand le capteur de poids détecte la pose d'un article à peser sur le plateau de charge (21).

4. Balance selon l'une des revendications 1 à 3,
**caractérisée en ce que**
le dispositif de commande (4) est relié à un dispositif d'entrée, de préférence un clavier ou un écran tactile (22), et lance une mesure des données d'utilisateur lorsqu'une entrée est effectuée par le biais du dispositif d'entrée (22).

5. Balance selon l'une des revendications 1 à 4,
**caractérisée en ce que**
le dispositif de commande (4) est relié à un pèse-personne (31) destiné à acquérir le poids d'un opérateur, et le dispositif de commande (4) lance une mesure des données d'utilisateur lorsqu'un utilisateur est détecté par le biais du pèse-personne (31).

6. Balance selon la revendication 5,
**caractérisée en ce que**
le dispositif de commande (4) utilise le poids d'un opérateur mesuré par le biais du pèse-personne (31) comme caractéristique d'identification biométrique pour déterminer l'identité d'opérateur.

7. Balance selon l'une des revendications 1 à 6,
**caractérisée en ce que**
le capteur biométrique (23) est conçu comme un capteur d'empreintes digitales destiné à identifier une empreinte digitale ou **en ce que** le capteur biométrique (23) est conçu comme un capteur de reconnaissance vocale, pourvu d'un microphone, destiné à identifier un profil vocal.

8. Balance selon l'une des revendications 1 à 6,
**caractérisée en ce que**
le capteur biométrique (23) est conçu comme un capteur optique, pourvu d'une caméra, destiné à la reconnaissance faciale.

9. Balance selon l'une des revendications précédentes,
**caractérisée en ce que**
le dispositif de commande (4) effectue un lien entre la valeur de poids mesurée et une information de marchandise et/ou une information de prix à l'aide d'une entrée d'opérateur par le biais d'un clavier ou d'un écran tactile (22).

10. Balance selon l'une des revendications précédentes,
**caractérisée en ce que**
le dispositif de commande (4) est relié à un traitement d'images numérique qui comporte une caméra (24) dirigée vers le plateau de charge et qui transmet au dispositif de commande (4) une analyse de l'image de caméra afin d'identifier l'article à peser qui a été posé de sorte que ce dispositif effectue automatiquement un lien entre la valeur de poids mesurée et une information de marchandise et/ou une information de prix à l'aide de l'analyse.

11. Balance selon l'une des revendications précédentes,
**caractérisée en ce que**
le dispositif de commande (4) est relié à la mémoire de données personnelles (41) et/ou à la mémoire de vente (42) et/ou à la mémoire de stock (43) par le biais d'une interface, de préférence d'une interface USB ou d'une interface LAN.

12. Groupement de balances comprenant au moins deux balances selon l'une des revendications précédentes,
**caractérisé en ce que**
les balances (11, 12) sont reliées entre elles et à la mémoire de vente (42) par le biais d'une interface de communication, de préférence d'une interface LAN, Ethernet, W-LAN, Intranet ou Internet.

13. Groupement de balances selon la revendication 12,
**caractérisé en ce que**
les balances (11, 12) sont reliées au dispositif de commande (4) par le biais d'une interface de communication, de préférence d'une interface LAN, Ethernet, W-LAN, Intranet ou Internet.

14. Groupement de balances selon l'une des revendications 12 ou 13,
**caractérisé en ce que**,
la mémoire de vente (42) peut être lue par le biais d'une interface, une balance (11, 12) ou un système de caisse ou une imprimante d'étiquettes appelant, à la fin d'un processus de vente, par le biais d'un signal pull, toutes les données de marchandise ou valeurs de poids, appartenant à une identité d'opérateur, par le biais de l'interface afin d'établir une facture.
